# FASCICULE DE BREVET EUROPEEN

(11) **EP 1 256 498 B1**
(45) Date de publication et mention de la délivrance du brevet: **24.05.2006**
(21) Numéro de dépôt: 02291141.6
(22) Date de dépôt: 06.05.2002
(51) Int. Cl.: B60S 1/50

(54) **Réservoir de lave-glace traversant une tôle d'automobile**
Waschflüssigkeitsbehälter, der das Blech einer Fahrzeugkarosserie durchquert
Washer tank attachment going through a vehicle bodywork panel

(30) Priorité: 11.05.2001 FR 0106249
(43) Date de publication de la demande: 13.11.2002
(73) Titulaire: Renault s.a.s., 92100 Boulogne Billancourt (FR); ADAM OPEL AG, 65423 Rüsselsheim (DE)
(72) Inventeur: Burban, Jean-Luc, 78410 Aubergenville (FR); Busquet, Olivier, 78000 Versailles (FR); Molleza, Victor, 78440 Gargenville (FR)
(74) Mandataire: Bertrand, Didier

(56) Documents cités:
- DE-U- 8 708 006
- US-A- 4 161 287
- US-B1- 6 223 793
- PATENT ABSTRACTS OF JAPAN vol. 2000, no. 14, 5 mars 2001 (2001-03-05) & JP 2000 313316 A (TOYOTA AUTO BODY CO LTD), 14 novembre 2000 (2000-11-14)
- PATENT ABSTRACTS OF JAPAN vol. 1997, no. 07, 31 juillet 1997 (1997-07-31) & JP 09 066810 A (HINO MOTORS LTD), 11 mars 1997 (1997-03-11)

## Description

La présente invention concerne un réservoir de liquide lave-glace pour véhicule automobile, et plus particulièrement un réservoir destiné à être placé à un endroit tel, par exemple en bas de caisse, qu'il est nécessaire de le prolonger vers le haut par une goulotte allongée dans laquelle est formée son ouverture de remplissage.

Cette goulotte, en fonction du positionnement du réservoir et de la géométrie du véhicule peut être amenée à devoir traverser une tôle du véhicule, par exemple une paroi horizontale de passage de roue.

Pour résoudre cette difficulté, on scinde habituellement le réservoir en deux parties, la goulotte d'un côté et le réservoir proprement dit de l'autre, qu'on amène des deux côtés du passage de tôle et qu'on raccorde par une liaison étanche. Cette solution est coûteuse et lourde en terme de main d'oeuvre. Les deux parties doivent être fixées séparément. Le temps de montage est relativement long et un risque de fuite lors de l'utilisation est toujours possible. De plus, il faut gérer, approvisionner et stocker en bord de chaîne de montage deux références de pièce différentes et leurs fixations standards.

Il existe encore d'autres solutions connues pour fixer un réservoir à goulotte allongée. Selon le document DE-U-87 08006.0, une partie du réservoir est en soufflet de manière à permettre son positionnement dans un environnement encombré, le soufflet étant ensuite gonflé pour trouver le plein volume du réservoir ; un tel soufflet est cependant fragile. Selon le document JP-A-09 066810, pour la fixation provisoire, on fait coopérer une patte de positionnement qui s'encliquette latéralement dans une ouverture d'une paroi latérale en attendant une fixation définitive par vissage, mais la présence d'une telle patte latérale supplémentaire dans un environnement déjà encombré n'est pas souhaitable.

On connaît aussi, par le document JP-A-2000 313316, dans le cadre d'un réservoir à goulotte ultra-courte, la possibilité d'obtenir un appui par un passage en force d'une saillie escamotable prévue sur la goulotte, ce qui exige que la goulotte soit courte et fendue pour que son embout terminal puisse s'encliqueter. Une telle solution est donc inapplicable à une goulotte longue dont la paroi périphérique ne doit surtout pas être fendue pour ne pas entraîner de fuite.

Le but de l'invention est de proposer une solution nouvelle pour la traversée des tôles par un réservoir à goulotte, qui ne présente pas ces inconvénients.

L'invention atteint son but grâce à un réservoir de liquide lave-glace monobloc comprenant une goulotte de préférence allongée, destinée à traverser une tôle d'un véhicule lors de sa mise en place, la goulotte comportant un relief destiné à prendre appui sur les bords d'une ouverture en serrure de ladite tôle dans la position de montage définitif du réservoir et à passer par l'ouverture dans une position de mise en place du réservoir, caractérisé en ce que le relief et l'ouverture sont agencés pour que la position de blocage sur les bords de l'ouverture corresponde à la position de mise en place suivie d'un mouvement de translation et/ou de rotation, sans déformation de la goulotte ou de l'ouverture mais par simple coopération de forme. Autrement dit, l'invention se caractérise par le fait que l'appui intermédiaire de la goulotte sur l'ouverture de la tôle est obtenu sans encliquetage à force mais par un effet de type "serrure/clef", où les positions de passage et de blocage résultent seulement d'un positionnement différent des parties, obtenu par un simple mouvement de translation ou de rotation (le plus avantageux), ou une combinaison des deux. La position de montage peut correspondre à la position de mise en place suivie d'une rotation sensiblement sur l'axe de la goulotte ou d'une translation latérale, et les formes respectives du relief et de l'ouverture sont choisies en fonction de cette possibilité. Ainsi contrairement à la solution antérieure où l'on évitait tout contact du réservoir et de la tôle, l'invention choisit d'utiliser ladite tôle comme support, au moins partiel, du réservoir.

Avantageusement, le réservoir comprend une patte de positionnement angulaire ou latéral du réservoir coopérant avec une butée prévue dans une paroi environnante du véhicule, et on engage cette patte contre la butée ou entre deux butées lors de la mise en place du réservoir.

Une fois le positionnement effectué, une patte de fixation coopérer avec une paroi environnante du véhicule pour réaliser la fixation définitive du réservoir.

L'invention sera mieux comprise à l'aide de la description qui suit, en référence aux dessins schématiques annexés représentant un réservoir conforme à l'invention. D'autres avantages et caractéristiques seront mis en évidence à la lecture de la description.
La figure 1 montre en perspective un exemple de réservoir lave-glace conforme à l'invention,
La figure 2 montre de manière plus schématique le même réservoir de côté et son principe de fixation,
La figure 3 est une vue analogue à la figure 2 illustrant la constitution et la fixation d'un réservoir classique.

Le réservoir 1 est monobloc et réalisé par exemple par moulage en polyéthylène. Sa forme est plus ou moins complexe car elle tient compte de l'environnement précis dans lequel il doit être intégré. Il comprend une partie 2 formant le réservoir proprement dit qui contient le liquide lave-glace et, à la partie supérieure de la partie 2, une goulotte 3 verticale ou légèrement oblique à ouverture 4 munie d'un bouchon non représenté.

La goulotte 3 comporte au niveau où elle doit traverser la tôle 10 par une ouverture 11 un ou des reliefs 5 réalisés par exemple sous forme d'un renflement tronconique de préférence limité à seulement certains secteurs angulaires de la goulotte de manière à constituer une sorte de clef, l'ouverture 11 étant elle réalisée de manière à constituer une serrure qui laisse passer les reliefs 5 lorsque la goulotte est introduite dans une certaine position angulaire, et qui ne les laisse plus passer lorsque la goulotte est tournée d'un certain angle autour de cette position angulaire. Il suffit par exemple de prévoir deux reliefs 5 diamétralement opposés et que l'ouverture ait une forme de lumière oblongue, permettant le passage des reliefs dans une position et leur appui après rotation de 90°. Bien que la rotation soit un mouvement commode pour faire passer la goulotte d'une position de passage à une position de blocage des reliefs, on peut naturellement choisir un autre mouvement, tel qu'une translation ou une combinaison de translation et de rotation. La forme des reliefs et de l'ouverture qui leur correspond est choisie en conséquence. Quand la goulotte 3 a été introduite dans l'ouverture 11 et tournée (ou autrement déplacée), elle s'appuie par les reliefs 5 sur des bords de l'ouverture 11 et tient ainsi le réservoir suspendu.

Le réservoir 1 comprend aussi au niveau inférieur de la partie 2 une patte verticale 6 qui peut venir s'engager, une fois la goulotte 3 passée dans l'ouverture 1, contre une ou de préférence deux butées (par exemple les bords d'une encoche 12 formée dans une paroi environnante) pour positionner le réservoir en rotation. (le cas échéant en translation latérale).

Enfin, le réservoir comporte un bras déporté 7 au bout duquel une patte horizontale 8 permet de visser le réservoir pour la fixation définitive, dans une paroi horizontale environnante (par exemple dans le longeron 13).

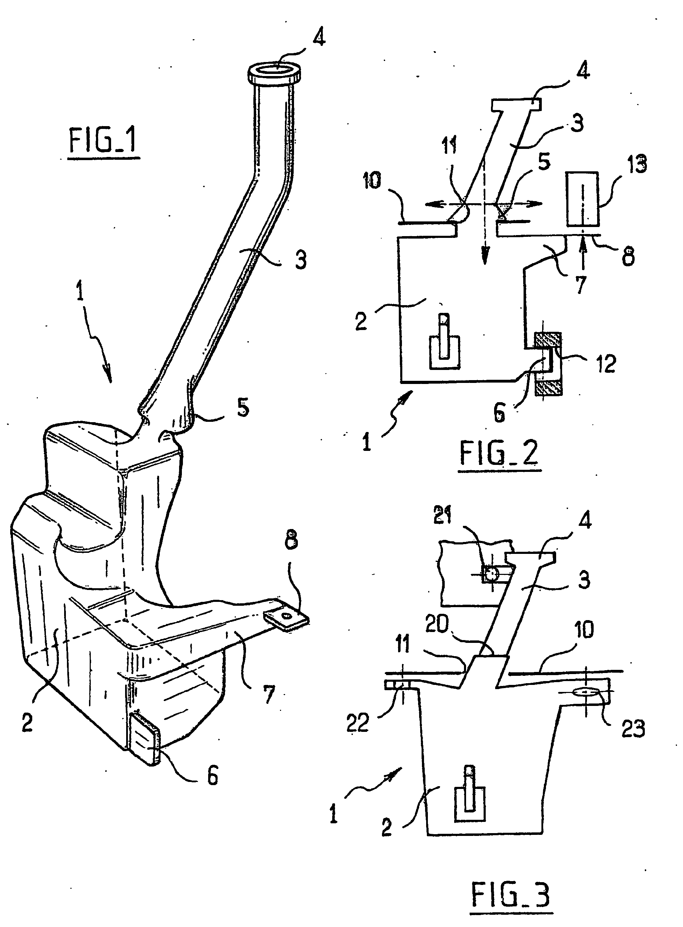

La figure 3 illustre le mode de fixation selon l'art antérieur, dans lequel la goulotte 3 et le réservoir 2 étaient réunis par une liaison étanche 20, la goulotte 3 étant fixée de son côté en 21, et le réservoir étant fixé du sien en deux endroits 22, 23.

## Revendications

1. Réservoir de liquide lave-glace (1) monobloc comprenant une goulotte (3) destinée à traverser une tôle (10) d'un véhicule lors de sa mise en place, la goulotte (3) comportant un relief (5) destiné à prendre appui sur les bords d'une ouverture (11) de ladite tôle (10) dans la position de montage définitif du réservoir et à passer par l'ouverture (11) dans une position de mise en place du réservoir, **caractérisé en ce que** le relief (5) et l'ouverture (11) sont agencés pour que la position de blocage sur les bords de l'ouverture (11) corresponde à la position de mise en place suivie d'un mouvement de translation et/ou de rotation, sans déformation de la goulotte ou de l'ouverture.

2. Réservoir selon la revendication 1, **caractérisé en ce que** le relief (5) et l'ouverture (11) sont agencés pour que la position de montage corresponde à la position de mise en place suivie d'une rotation sensiblement sur l'axe de la goulotte (3).

3. Réservoir selon l'une quelconque des revendications 1 ou 2, **caractérisé en ce qu'**il comprend une patte (6) de positionnement angulaire du réservoir (1) coopérant avec une butée (12) prévue dans une paroi environnante du véhicule.

4. Réservoir selon l'une quelconque des revendications 1 à 3, **caractérisée en ce qu'**il comprend une patte (8) de fixation coopérant avec une paroi (13) environnante du véhicule.

5. Réservoir selon l'une quelconque des revendications 1 à 4, **caractérisé en ce que** la goulotte (3) est de forme allongée.

## Claims

1. One-piece washer fluid tank (1) comprising a neck (3) intended to pass through a panel (10) of a vehicle while it is being fitted, the neck (3) comprising a relief (5) intended to bear against the edges of an opening (11) in the said panel (10) when the tank is in its definitive fitted position, and to pass through the opening (11) when the tank is in a fitting position, **characterized in that** the relief (5) and the opening (11) are designed such that the position of immobilization against the edges of the opening (11) corresponds to the fitting position followed by a translational and/or rotational movement without deformation of the neck or of the opening.

2. Tank according to Claim 1, **characterized in that** the relief (5) and the opening (11) are designed so that the mounted position corresponds to the fitting position followed by a rotational movement more or less about the axis of the neck (3).

3. Tank according to either one of Claims 1 and 2, **characterized in that** it comprises a lug (6) for the angular positioning of the tank (1) and collaborating with a stop (12) provided in a surrounding wall of the vehicle.

4. Tank according to any one of Claims 1 to 3, **characterized in that** it comprises a fixing lug (8) collaborating with a surrounding wall (13) of the vehicle.

5. Tank according to any one of Claims 1 to 4, **characterized in that** the neck (3) is of elongate shape.

## Patentansprüche

1. Einstückiger Waschflüssigkeitsbehälter (1), umfassend einen Ausguß bzw. ein Gießrohr (3), das während seiner Anordnung dazu bestimmt ist, ein Blech (10) eines Fahrzeugs zu durchqueren, wobei der Ausguß (3) ein Profil (5) umfaßt, das dazu bestimmt ist, an den Rändern einer Öffnung (11) des Blechs (10) in der definitiven Montageposition des Behälters abgestützt zu sein und durch die Öffnung (11) in einer Anordnungsposition des Behälters hindurchzutreten, **dadurch gekennzeichnet, daß** das Profil (5) und die Öffnung (11) betätigt sind, damit die Blockierungsposition an den Rändern der Öffnung (11) mit der nachfolgenden Anordnungsposition einer Translations- und/oder Rotationsbewegung ohne Deformation des Ausgusses oder der Öffnung übereinstimmt bzw. dieser entspricht.

2. Behälter nach Anspruch 1, **dadurch gekennzeichnet, daß** das Profil (5) und die Öffnung (11) betätigt bzw. ausgebildet sind, damit die Montageposition der Anordnungsposition nachfolgend auf eine Rotation im wesentlichen um die Achse des Ausgusses (3) entspricht.

3. Behälter nach Anspruch 1 oder 2, **dadurch gekennzeichnet, daß** er einen winkeligen Positionierfortsatz bzw. -fuß (6) des Behälters (1) umfaßt, welcher mit einem Anschlag (12) zusammenwirkt, der in einer umgebenden Wand des Fahrzeugs vorgesehen ist.

4. Behälter nach einem der Ansprüche 1 bis 3, **dadurch gekennzeichnet, daß** er einen Festlegungsfortsatz bzw. -fuß (8) umfaßt, der mit einer umgebenden Wand des Fahrzeugs (13) zusammenwirkt.

5. Behälter nach einem der Ansprüche 1 bis 4, **dadurch gekennzeichnet, daß** der Ausguß (3) eine längliche Form aufweist.
